# EUROPEAN PATENT APPLICATION

(11) **EP 2 902 979 A1**
(43) Date of publication of application: **05.08.2015**
(21) Application number: 15152748.8
(22) Date of filing: 27.01.2015
(51) Int. Cl.: G07F 11/58, G07F 11/44, G01F 13/00

(54) **Dispensing device of loose granular products, for example gumdrops or nuts, and dispensing method thereof**

(30) Priority: 04.02.2014 IT PR20140005
(71) Applicant: Ducale Macchine da Caffe' di Sandei Ugo E.C. S.N.C., 43122 Parma (IT)
(72) Inventor: Sandei, Pietro, 43122 PARMA (IT); Sandei, Stefano, 43122 PARMA (IT)
(74) Representative: Dondi, Silvia

(57) **Abstract**

A dispensing device (1) of loose granular products, for example gumdrops or nuts, comprising:
a box container (2) for loose granular products;
a dispensing mouth (3) for dispensing the products;
a mobile mat (4) to support the loose granular products, which is surmounted by the box container (2) and extends as far as the dispensing mouth (3).

## Description

The present invention relates to a dispensing device of loose granular products, for example gumdrops or nuts, and the relative dispensing method.

In particular, the dispensing device proposed herein can be used in the automatic distribution sector, also known as vending. Alternatively, the dispensing device is a free standing device that can be used in businesses to replace traditional bowls mainly for hygiene reasons.

Gravity-based dispensers of loose granular products are known, such as sweets, candies, nuts, appetizers, cereals, etc.

Such gravity-based dispensers essentially comprise:
- a container or tank for the products;
- a dispensing mouth provided at the bottom of the container;
- a door associated with the dispensing mouth;
- control means for controlling the amount of product dispensed.

For example, document US5437393 describes and illustrates a dispenser comprising a tank with an inclined base onto which the products (in this case cereals) descend by gravity towards a dispensing chamber. The inlet of products to the dispensing chamber is controlled by a vertical limiter. In the dispensing chamber there is a pivoted bowl that allows the pre-dosing of the products, i.e. the separation of the amount to be dispensed with respect to the stored products.

Gravity-based dispensers are not however suitable for dispensing products such as gumdrops, nuts and in general sticky or sugary products, which tend to be compacted and to cake together, obstructing the dispensing mouth.

To obviate this problem, in the solution illustrated in document US7178697, a so-called "agitator" element is placed at the inclined base of the tank housing the products. The agitator element substantially extends parallel to the inclined base and has a plurality of projections or ribs having substantially orthogonal faces to the inclined base. The movement of the agitator element is activated through the same crank that enables the opening/closing of the door associated with the dispensing mouth. Hence, by turning the crank, the agitator element slides parallel to the inclined base so that the orthogonal faces of the projections come into contact with the gummy or sticky products to separate them and promote their advancement towards the dispensing mouth.

This solution is quite inconvenient since it requires the manual movement of the agitator whenever the products must be separated.

As well as dispensers provided with a gravity-based system, dispensers with a rake are known, wherein the products are made to advance towards the dispensing mouth through a rake that can be manoeuvred from outside (see document US5105991).

Finally, in paddle/scoop dispensers, the dosing takes place by manually accessing the product stored in the container through a paddle or scoop.

From document US6702151 a dispenser is also known provided with a mobile mat with projections, having a first flat stretch and a second inclined stretch. However, also in this solution the problem of caking is still present.

In this context, the technical task underpinning the present invention is to propose a dispensing device of loose granular products, for example, gumdrops or nuts, and a dispensing method, which overcome the drawbacks of the known art mentioned above.

In particular, the object of the present invention is to propose a dispensing device and a dispensing method of loose granular products, for example, gumdrops or nuts, which can automatically and continuously contrast caking and facilitate the descent of the products.

The stated technical tasks and the specified objects are substantially attained by a dispensing device of loose granular products, for example, gumdrops or nuts, and a dispensing method, comprising the technical characteristics set out in one or more of the claims.

Further characteristics and advantages of the present invention will better emerge from the indicative, therefore non-limiting description of a preferred but not exclusive embodiment of a dispensing device of loose granular products, for example, gumdrops or nuts, and a dispensing method, as illustrated in the accompanying drawings, in which:

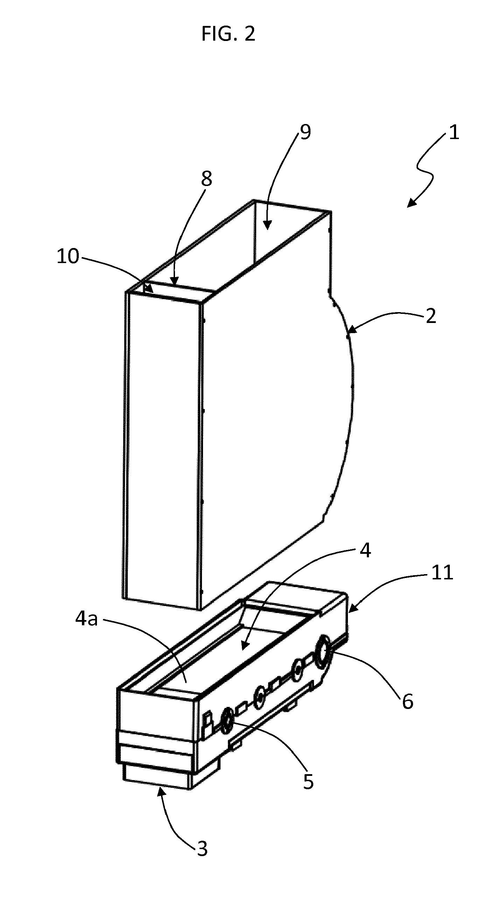

- figures 1 and 2 illustrate a dispensing device of loose granular products, according to the present invention, in perspective view assembled and partially disassembled, respectively;

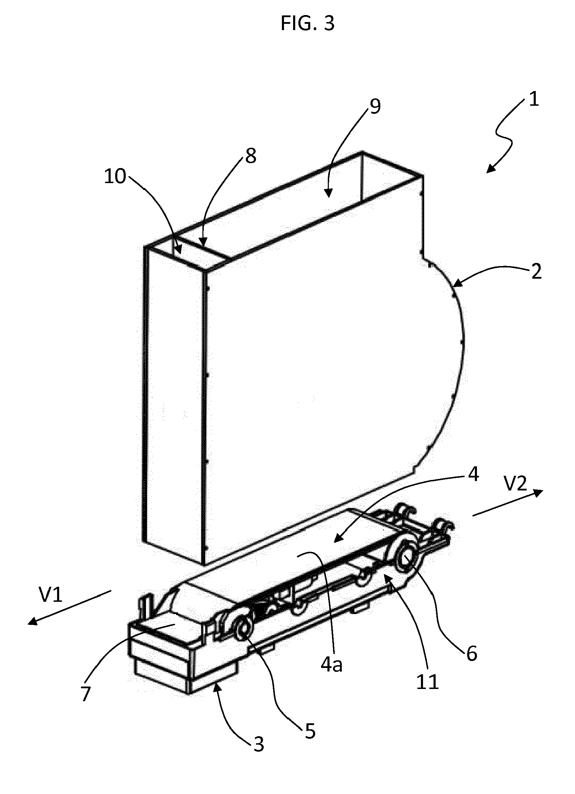

- figure 3 illustrates the dispensing device of figure 2, wherein a portion of casing has been removed for clarity purposes.

With reference to the figures, number 1 indicates a dispensing device of loose granular products. For example, the loose granular products are gumdrops, nuts, hard sweets, candies, appetizers or cereals. The loose granular products are stored in a box container 2 and are dispensed through a dispensing mouth 3 pertaining to the box container 2.

Originally, the dispensing device 1 comprises a mobile mat 4 to support the loose granular products. The mobile mat 4 is surmounted by the box container 2 and extends as far as the dispensing mouth 3.

The dispensing mouth 3 is associated with a door 7 mobile between at least a first configuration wherein it closes the dispensing mouth 3 in such a way as to stop the dispensing of the products, and a second configuration wherein the door 7 releases the dispensing mouth 3 in such a way as to let the products out of the box container 2.

Advantageously, the mobile mat 4 has a rough support surface 4a or is provided with projections. For example, such projections are of the dotted type or are ribs.

Preferably, the material that constitutes the support surface 4a is rubber. Alternatively, the support surface 4a is made of plastic or metal. Preferably, the support surface 4a is an embossed surface, i.e. obtained through embossing. As is known, embossing consists of creating a drawing or pattern in relief on a yieldable material (such as rubber) by exerting pressure.

Alternatively, the support surface 4a is smooth.

The mobile mat 4 consists of a continuous endless belt, i.e. a closed loop belt. Alternatively, the mobile mat 4 comprises a plurality of adjacent segments united to form an endless belt.

In all the different embodiments, the support surface 4a of the mobile mat 4 is the upper portion of the endless belt on which the products are resting.

In the preferred embodiment, the mobile mat 4 is supported by a first toothed roller 5 and a second smooth roller 6 which, together with a gear motor (not illustrated), constitute the movement means for moving the mobile mat 4. In particular, the gear motor enables the running of the mobile mat 4 in two directions, i.e.:
- in a forwards direction V1, therefore the support surface 4a moves taking the products to the dispensing mouth 3;
- in a reverse direction V2, therefore the support surface 4a moves taking the products away from the dispensing mouth 3.

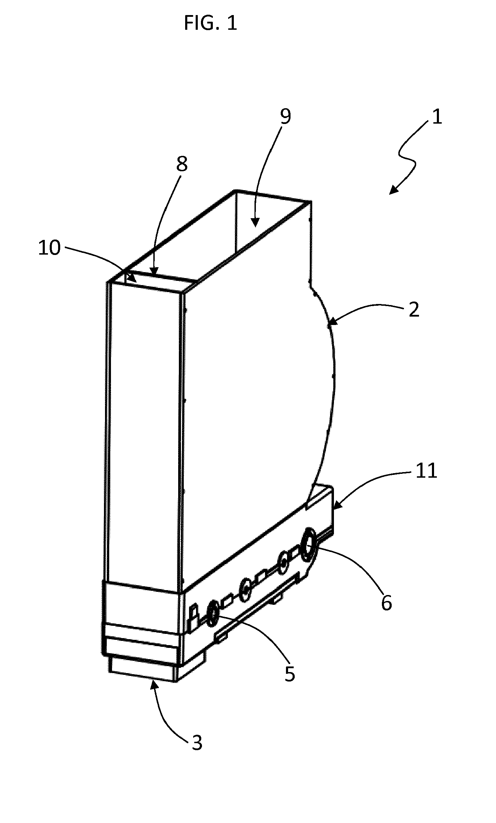

The movement of the door 7 is controlled by the first toothed roller 6. In particular, while the mobile mat 4 is running in the forwards direction V1, the door 7 is in the second configuration, therefore the products are dispensed through the dispensing mouth 3. Vice versa, while the mobile mat 4 is moving in the reverse direction V2, the door 7 is brought into the first configuration, therefore the dispensing of the products is interrupted. Preferably, the mobile mat 4, the rollers 5, 6, the gear motor and the door 7 are protected by a casing 11, for example made of plastic or metal. As can be seen in figure 1, the box container 2 rests on the casing 11 and is fixed thereto.

Preferably, the mobile mat 4 defines a plane inclined upwards towards the dispensing mouth 3. In particular, the mobile mat 4 defines a plane inclined upwards from the second roller 6 to the first roller 5.

Preferably, within the box container 2 there is a stop element 8 adapted to limit the advancement of the loose granular products towards the dispensing mouth 2. In the preferred embodiment described and illustrated herein, the stop element 8 consists of a wall orthogonal to the mobile mat 4 in such a way as to separate a storage area 9 of the products from a pre-dosing area 10 of the products.

Preferably, the position of the wall 8 within the box container 2 can be varied to change the volumetric ratio between the storage area 9 and the pre-dosing area 10 according to the type and dimension of loose granular products to be dispensed.

For example, in the embodiment described and illustrated herein, the wall 8 extends above the first toothed roller 5, therefore the product pre-dosing area 10 extends above the dispensing mouth 3.

The dispensing mouth 1 is also provided with weight dosing means for establishing the weight of the dispensed products. For example, such dosing means comprise a load cell.

The dispensing device 1 comprises a processing and control unit (not illustrated) operatively active on the movement means of the mobile mat 4 to control the running of the mobile mat 4 and the opening/closing of the door 7.

The processing unit also controls the dosing of the dispensed products, according to the weight and dispensing time, as will be explained later in the operation section.

Preferably, the box container 2 is provided with a lid (not illustrated). For example, the lid is hermetically sealed.

The dispensing device 1 can be inserted within an automatic distributor. The method for dispensing loose granular products, for example gumdrops or nuts, is described below.

First of all, the loose granular products (e.g. gumdrops or nuts) are introduced into the box container 2 through the lid on the top of the box container 2 itself.

Preferably, during the filling step, the mobile mat 4 is stationary and the door 7 is in the first configuration.

The products thus accumulate on the mobile mat 4, particularly above the support surface 4a.

The wall 8 arranged within the box container 2 forces the products to be arranged mainly in the storage area 9. The inclination of the mobile mat 4 also contributes to this, being arranged upwards towards the dispensing mouth 3, it ensures that the products remain in the storage area 9. Whenever there is a request for the dispensing of products, the processing and control unit activates the gear motor, which enables the running of the mobile mat 4 in the forwards direction V1. In this way, the support surface 4a advances towards the dispensing mouth 3, also determining the advancement of the products.

In the event of a rough support surface 4a (or with projections), products caking is prevented and, at the same time, the products are held by friction on the support surface 4a during the movement of the mobile mat 4.

The processing and control unit also determines the opening of the door 7, which passes from the first to the second configuration, hence letting the products out through the dispensing mouth 3.

In the meantime, below the dispensing mouth 3 a cup or a bag has been provided to receive the dispensed products.

In the embodiment provided with a load cell, the dispensing of products is interrupted when the products dispensed reach a pre-established weight. Alternatively, once a pre-established time period has passed, the dispensing is automatically interrupted.

In both cases, when dispensing is finished, the gear motor forces the mobile mat 4 to invert the running direction, i.e. to run in the reverse direction V2. In that way, the support surface 4a moves away from the dispensing mouth 3. The processing and control unit also determines the closing of the door 7, which thus returns to the first configuration, stopping any more products coming out of the dispensing mouth 3.

The reverse movement of the mobile mat 4 also takes place whenever it is necessary to contrast the caking of products at the dispensing mouth 3.

The characteristics of the dispensing device and dispensing method of loose granular products, for example gumdrops or nuts, according to the present invention, are clear, as are the advantages, from the description given.

In particular, due to the presence of a mobile mat, the advancement of the products towards the dispensing mouth is controlled automatically. This prevents the products, particularly gummy or sticky ones, accumulating in proximity to the dispensing mouth.

Furthermore, having created an embossed or rough mobile mat allows caking to be prevented and, at the same time, the products to be kept on the mat during its advancement towards the dispensing mouth.

Caking can also be prevented by inverting the running direction of the mobile mat when necessary.

Furthermore, the provision of the mobile mat upwards towards the dispensing mouth forces the products to stay in the storage area until the mat is placed in motion, hence preventing products reaching the pre-dosing area and obstructing the dispensing mouth. The inside wall of the box container also contributes to that aim.

In other words, the products are brought into the pre-dosing area only when dispensing is effectively requested, hence preventing caking in proximity to the mouth and obstructing it, as happened in gravity-based dispensers.

The dispensing device proposed herein is compact and structurally simple since the mobile mat is integrated into the box container.

## Claims

1. Dispensing device (1) of loose granular products, for example gumdrops or nuts, comprising:
a box container (2) for loose granular products;
a dispensing mouth (3) of said products pertaining to said box container (2);
a mobile mat (4) on which the loose granular products rest, said mobile mat (4) being surmounted by said box container (2) and extending as far as said dispensing mouth (3),
**characterised in that** it comprises a stop element (8) arranged within the box container (2) to limit the advancement of the loose granular products towards the dispensing mouth (2), said stop element (8) consisting of a wall orthogonal to the mobile mat (4) in such a way as to separate a storage area (9) of the products from a pre-dosing area (10) of the products.

2. Dispensing device (1) according to claim 1, further comprising a door (7) associated with said dispensing mouth (3), said door (7) being mobile between at least a first configuration wherein the door (7) closes the dispensing mouth (3) in such a way as to stop the dispensing of products, and a second configuration wherein said door (7) releases the dispensing mouth (3) in such a way as to enable the dispensing of products.

3. Dispensing device (1) according to claim 1 or 2, wherein said mobile mat (4) consists of a continuous endless belt, or a plurality of adjacent segments united to form an endless belt.

4. Dispensing device (1) according to any one of the preceding claims, further comprising at least a first toothed roller (5) and a second smooth roller (6) that support and determine the running of the mobile mat (4).

5. Dispensing device (1) according to any one of the preceding claims, wherein said mobile mat (4) has a rough support surface (4a) or is provided with projections.

6. Dispensing device (1) according to claim 5, wherein said support surface (4a) is made of rubber.

7. Dispensing device (1) according to claim 5 or 6, wherein said support surface (4a) is an embossed surface.

8. Dispensing device (1) according to claims 4 to 7, further comprising movement means for moving the mobile mat (4) which consist in a gear motor that enables the running of the mobile mat (4) in two directions, that is:
- in a forwards direction (V1), therefore the support surface (4a) moves taking the products to the dispensing mouth (3);
- in a reverse direction (V2), therefore the support surface (4a) moves taking the products away from the dispensing mouth (3).

9. Dispensing device (1) according to any of the preceding claims, wherein the position of the wall (8) within the box container (2) varies in such a way as to change the volumetric ratio between the storage area (9) and the pre-dosing area (10) of the products according to the type and size of the loose granular products to be dispensed.

10. Dispensing device (1) according to any one of the preceding claims, wherein said mobile mat (4) defines a plane inclined upwards towards the dispensing mouth (3).

11. Dispensing device (1) according to any one of the preceding claims, further comprising weight dosing means for establishing the weight of the dispensed products.

12. Automatic distributor comprising a dispensing device (1) according to any one of the preceding claims.

13. Method for dispensing loose granular products, for example gumdrops or nuts, comprising the steps of:
introducing said loose granular products into a box container (2) so that they accumulate on a mobile mat (4);
making said mobile mat (4) run towards a dispensing mouth (3) of the products pertaining to the box container (2);
dispensing the products through the dispensing mouth (3).

14. Method according to claim 13, further comprising a step of interrupting the dispensing of products when a pre-established weight of dispensed products is reached or after a pre-established time period has passed, said step of interrupting the dispensing taking place by inverting the running direction of the mobile mat (4) so that a support surface (4a) of the latter moves away from said dispensing mouth (3).
